# EUROPÄISCHE PATENTANMELDUNG

(11) **EP 1 493 695 A1**
(43) Veröffentlichungstag der Anmeldung: **05.01.2005**
(21) Anmeldenummer: 04015626.7
(22) Anmeldetag: 02.07.2004
(51) Int. Cl.: B65G 49/06

(54) **Vorrichtung zur Plattenübergabe zwischen einem Plattenförderer und einem Stapelgestell oder dergleichen**

(30) Priorität: 04.07.2003 DE 10330160
(71) Anmelder: Grenzebach Maschinenbau GmbH, 86663 Asbach-Bäumenheim/Hamlar (DE)
(72) Erfinder: Franz, Roland, 86681 Fünfstetten (DE)
(74) Vertreter: Gallo, Wolfgang, Dipl.-Ing. (FH)

(57) **Zusammenfassung**

Einrichtung zur Plattenübergabe zwischen einem Plattenförderer (1) und einem Stapelgestell (2) oder ähnlichem, wobei ein an einem Transportarm (4) angeordneter Plattengreifer (5), insbesondere Saugrahmen, wahlweise in eine nach unten zur Plattenoberseite oder nach oben zur Plattenunterseite weisende Stellung zur Aufnahme einer Platte (P) vom Plattenförderer (1) schwenkbar ist und diese Schwenkbewegung kinematisch mit der Bewegung des Transportarms (4) über zwei Gestänge (6,7) erzeugt wird, die wahlweise wirkungsmäßig mit dem Plattengreifer kuppelbar sind.

## Beschreibung

Die Erfindung betrifft eine Einrichtung zur Übergabe von Platten zwischen einem Plattenförderer und einem Stapelgestell oder dergleichen.

Insbesondere kann die Erfindung zur Handhabung von Glasplatten Anwendung finden, wo am Ende einer Glasfertigungslinie von der Flachglasfertigung kommendes, in Formate geschnittenes Flachglas in Gestalt der Formatplatten auf einem Plattenförderer herangeführt wird und die Glasplatten am Ende des Plattenförderers von diesem abgenommen und auf Stapelgestelle oder dergleichen umgesetzt werden müssen. Jedoch ist die Anwendbarkeit der Erfindung nicht auf die Handhabung von Glasplatten beschränkt, sondern eignet sich in gleicher Weise für andere Platten aller Art, die auf einem Plattenförderer herangefördert werden und einer an dessen Ende oder einer im Verlaufe des Plattenförderers liegenden Abnahmestation vom Plattenförderer abgenommen und auf Stapelgestelle, Transportwagen oder dergleichen umgesetzt werden müssen. Freilich besteht Anwendemöglichkeit auch umgekehrt, nämlich zur Plattenübergabe auf einen Plattenförderer.

Bei der Flachglasherstellung wird ein flaches und sich kontinuierlich bewegendes Glasplattenband durch Aufbringen der Glasschmelze auf ein Flüssigmetallbad ausgebildet. Das auf dem Metallbad schwimmende Flachglasband (daher auch üblicherweise als Floatglas bezeichnet) gelangt nach ausreichendem Abkühlen und Erstarren zu Schneidestationen, wo das Glas durch Längsschneider und Querschneider zu glatten in den gewünschten Formaten geschnitten wird. Diese geschnittene Glasplatten gelangen dann über Abförderer zu Stapelstationen, wo sie zum Weitertransport und zur weiteren Verarbeitung auf Stapelgestellen gestapelt werden.

Wenn die Glasplatten anschließend einer Beschichtung unterzogen werden sollen, um beispielsweise die optischen Eigenschaften wie Lichtdurchlässigkeit, Reflexionsverhalten, optisches Erscheinungsbild oder die Durchlässigkeit für Wärmestrahlung zu beeinflussen, wie das verbreitet bei Bauverglasungen gewünscht wird, soll die zu beschichtende Glasseite möglich frei von Verunreinigungen und Beeinträchtigungen aller Art gehalten werden. Deshalb wählt man dazu vorzugsweise die sogenannte Luftseite des Flachglases (im Gegensatz zur Badseite, also derjenigen Seite, mit welcher das Flachglas beim Herstellungsvorgang auf dem Flüssigmetallbad schwimmt), die auch beim späteren Transport auf dem Plattenförderer bis zur Stapelstation frei von mechanischen Einwirkungen ist, weil es ja die Badseite der Glasplatten ist, mit der die Glasplatten auf den Rollen des Plattenförderers laufen.

An der Stapelstation wird nun allerdings die Glasplatte, um sie vom Plattenförderer abheben zu können, auf ihrer Luftseite mittels eines am Ende eines Roboterarms angeordneten Saugrahmens mit einer Mehrzahl von Saugnäpfen ergriffen, abgehoben und auf das Stapelgestell umgesetzt. Dadurch können nun erstmals Verunreinigungen oder Spuren auf der sogenannten Luftseite der Glasplatten hervorgerufen werden. Solche Spuren sind zwar mit bloßem Auge normalerweise nicht sichtbar, aber sie können, wenn die Glasplatten beschichtet werden sollen, störend wirken und können nach einer Beschichtung durchaus sichtbar hervortreten. Bei Autoglasscheiben oder Bauverglasungen kann dann beispielsweise beim Beschlagen der Scheibe sich ein Ringmuster an den Angriffsstellen der Saugnäpfe abzeichnen. Das ist sehr unerwünscht.

Aus der EP-1 298 080 A1 ist bereits eine Einrichtung zur Plattenübergabe von einem Plattenförderer auf ein Stapelgestell bekannt, welche dieses Problem behandelt. Dort ist an einer Plattenübergabestation ein Roboterarm mit einem an seinem freien Ende angeordneten Saugrahmen vorgesehen, wobei der Saugrahmen wahlweise in eine vertikal nach oben weisende Position geschwenkt werden kann, und wobei der so nach oben geschwenkte Saugrahmen in Aussparungen des Plattenförderers eintauchbar ist, um eine Glasplatte an ihrer dem Plattenförderer zugewandten Unterseite zu ergreifen und auf das Stapelgestell zu schwenken. Der Saugrahmen kann aber auch, wie üblich, in eine nach unten weisende Position geschwenkt werden, um die Platten, wie bisher, an der Luftseite zu ergreifen, wo dies für die weitere Verwendung der Glasplatten keine Rolle spielt. Bei der bekannten Einrichtung ist ein motorischer Antrieb erforderlich, um den Saugrahmen in die jeweils gewünschte Position zu schwenken. Dieser motorische Antrieb mit den zugehörigen Mitteln zur exakten Positionierung des Saugrahmens in der jeweils gewählten Schwenkstellung bedingt eine aufwendige Konstruktion, entsprechen der Wartungsaufwand und auch die Gefahr einer erhöhten Störungsanfälligkeit.

Der Erfindung liegt daher die Aufgabe zugrunde, eine Einrichtung zur Übergabe von Platten, insbesondere Glasplatten, von einem Plattenförderer auf ein Stapelgestell oder dergleichen zu schaffen die ein Ergreifen der Platten von der Plattenunterseite, nämlich der Badseite von Glasplatten, ermöglicht und einen zwischen Roboterarm und Saugrahmen angeordneten motorischen Drehantrieb entbehrlich macht.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Bei der erfindungsgemäßen Einrichtung findet das Schwenken des Saugrahmens (oder allgemein gesprochen des Plattengreifers) über mechanische Gestänge statt. Dabei sind zwei mechanische Gestänge mit dem Saugrahmen verbunden, und mittels einer umschaltbaren Kupplung wirkt jeweils entweder das eine Gestänge oder das andere Gestänge auf den Saugrahmen. Dabei bewirkt das eine Gestänge eine Orientierung des Saugrahmens mit den Saugnäpfen nach unten zum Ergreifen der Platte von der Plattenoberseite, und das andere Gestänge bewirkt ein Schwenken des Saugrahmens nach oben mit nach unten weisenden Saugnäpfen zum Ergreifen der Platte von der Unterseite. Das Schwenken des Saugrahmens erfolgt jeweils im Zusammenwirken der Schwenkbewegung des Roboterarms mit dem jeweiligen Gestänge derart, daß die richtige Schwenkposition in der zum Ergreifen der Platte notwendigen Position des Roboterarms hergestellt ist. Der Roboterarm ist dabei als einfacher Schwenkarm ausgebildet.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: eine schematische Seitenansicht der Einrichtung nach der Erfindung, wobei der Saugrahmen in beiden möglichen Schwenkpositionen dargestellt ist
- Fig. 2: eine detaillierte Seitenansicht der Einrichtung mit nach unten geschwenktem Saugrahmen zum Ergreifen einer Platte von oben, und
- Fig. 3: eine ähnliche Seitenansicht der Einrichtung mit nach oben geschwenktem Saugrahmen zum Ergreifen einer Platte von unten.

Die Zeichnungen sind schematisch gehalten und dienen nur dazu, das Prinzip der Erfindung zu erläutern.

In den Zeichnungen dargestellt ist das Ende eines Plattenförderers 1, auf dem in Formate geschnittene Glasplatten herangeführt werden. Eine Glasplatte ist sichtbar und mit P bezeichnet. An diesem Ende des Plattenförderers 1 befindet sich eine Übergabestation, um die Glasplatten P vom Plattenförderer zu übernehmen und auf einem Stapelgestell 2 zu stapeln.

Die an der Übergabestation befindliche Einrichtung zur Plattenübergabe umfasst ein Gestell 3 mit einem Transportarm 4 und einem daran angeordneten Saugrahmen 5. Der Transportarm 4 ist um eine Achse 6 schwenkbar am Gestell 3 angeordnet und trägt den Saugrahmen 5 an seinem freien Ende.

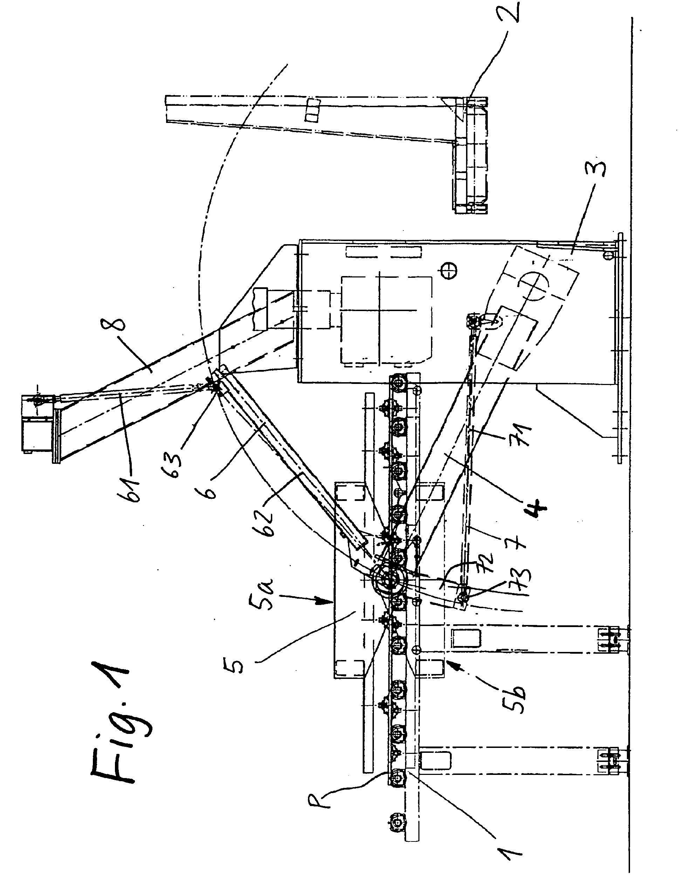

Der Plattenförderer 1 weist in seinem Endbereich (was in der schematischen Seitenansicht nach Fig. 1 nicht erkennbar ist) Aussparungen auf, die ein Eintauchen des Saugrahmens 5 ermöglichen, um eine Platte an der Unterseite zu ergreifen.

Der Saugrahmen 5 ist wahlweise in eine mit seinen Saugnäpfen nach unten weisende Position 5a zum Ergreifen einer Platte P an deren Oberseite, und in eine mit den Saugnäpfen nach oben weisende Position 5 b zum Ergreifen der Platte P an deren Unterseite schwenkbar.

In Figur 1 sind beide Positionen dargestellt, wobei der Saugrahmen in der nach unten weisenden Position 5a mit Volllinien und in der nach oben weisenden Position 5b gestrichelt eingezeichnet ist.

Das wahlweise Schwenken wird mittels mechanischer Gestänge 6 und 7 bewerkstelligt. Das eine Gestänge 6 weist Glieder 61 und 62 auf, die durch ein Gelenk 63 miteinander verbunden sind. Das Glied 61 ist an einem am Gestell 2 angeordneten, nach oben ragenden Holm 8 angelenkt, und das andere Glied 62 ist als Schwenkhebel ausgebildet und mit dem Saugrahmen 5 verbunden. Das andere Gestänge 7 weist Glieder 71 und 72 auf, die durch ein Gelenk 73 verbunden sind. Das Glied 71 ist am Gestell 2 angelenkt, und das Glied 72 ist als Schwenkhebel ausgebildet und mit dem Saugrahmen 5 verbunden.

Die Verbindung der Glieder 62 und 72 der Gestänge 6 und 7 mit dem Saugrahmen erfolgt über einen umschaltbaren Kupplungsmechanismus (nicht dargestellt). Dadurch ist wahlweise das eine Gestänge 6 und das andere Gestänge 7 mit dem Saugrahmen 5 mechanisch kuppelbar, wobei dann das jeweils andere Gestänge beim Bewegungsvorgang des Transportarms 4 mit dem Saugrahmen 5 leer mitläuft. Ist das Gestänge 6 wirkungsmäßig mit dem Saugrahmen 5 gekuppelt, schwenkt der Saugrahmen 5 beim Schwenken des Transportarms 4 an den Transportförderer 1 heran automatisch in seine nach unten weisende Position 5a zum Ergreifen einer Platte P an deren Oberseite. Ist das Gestänge 7 wirkungsmäßig mit dem Saugrahmen 5 gekuppelt, schwenkt der Saugrahmen 5 beim Schwenken des Transportarms 3 an den Plattenförderer 1 automatisch in die nach oben weisende Position 5b zum Ergreifen einer Platte P an deren Unterseite. Beim Schwenken des Transportarms 3 in Richtung zum Stapelgestellt 2 erfolgt in beiden Fällen eine Schwenkung des Saugrahmens 5 mit der aufgenommenen Glasplatte P in die erforderliche Stapelposition.

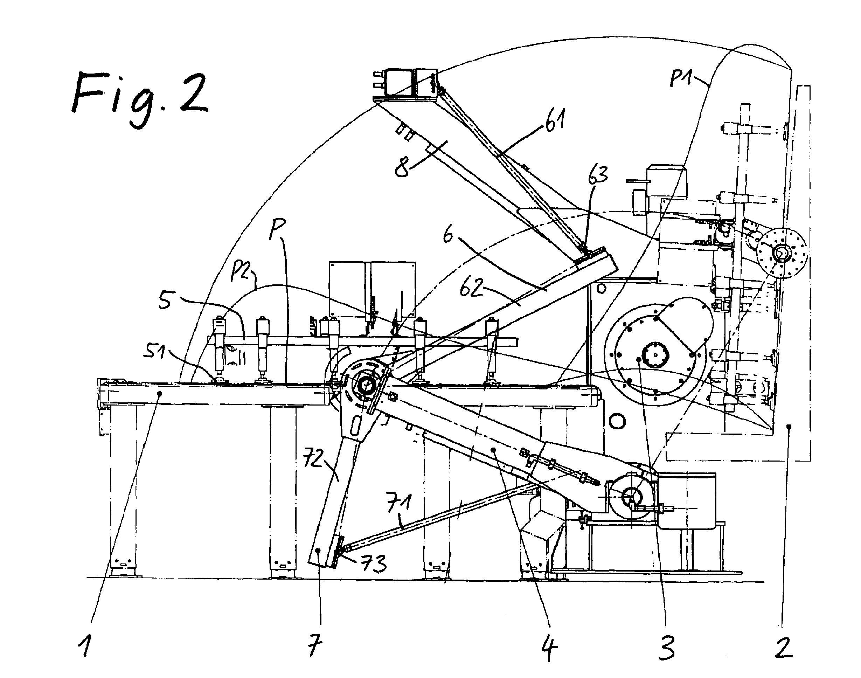

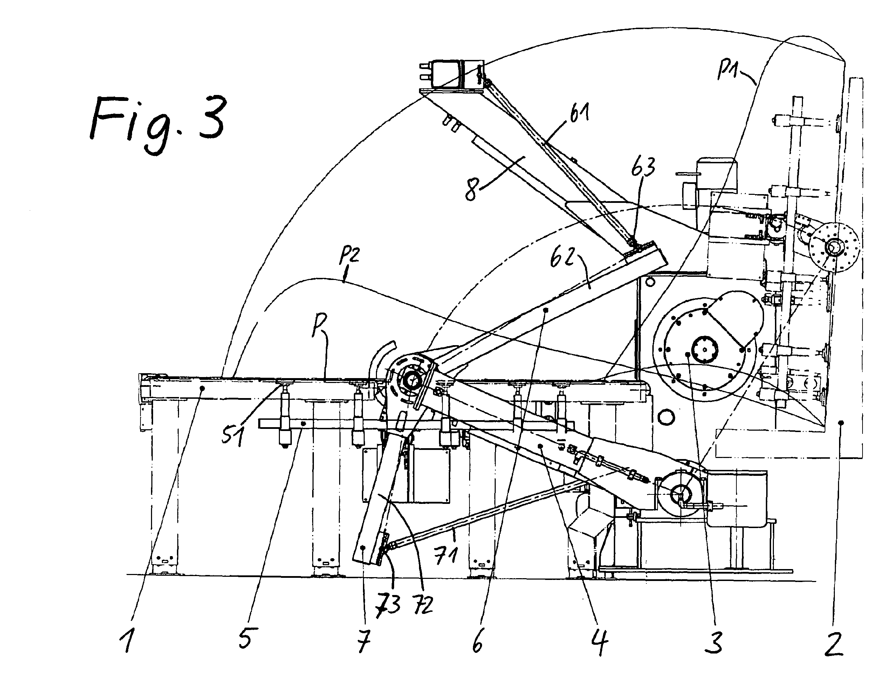

Figur 2 zeigt den Mechanismus in der Position mit nach unten geschwenktem Saugrahmen 5 zum Ergreifen einer Platte P an deren Oberseite, und Figur 3 zeigt den Mechanismus in der Position mit nach oben geschwenktem Saugrahmen 5 zum Ergreifen einer Platte P an deren Unterseite.

Die Figuren 2 und 3 zeigen die Einrichtung in etwas näheren Einzelheiten als Figur 1, wobei auch der Saugrahmen 5 detaillierter dargestellt ist und dessen Saugnäpfe 51 erkennbar sind. Auch die Ausbildung des Transportarms 4 und der Gestänge 6 und 7 mit den jeweils als Schwenkhebel ausgebildeten Gliedern 62 und 72 ist deutlich ersichtbar. Zugleich sind in den Figuren 2 und 3 durch Linien P1 und P2 der Bewegungsverlauf der vorderen und hinteren Plattenkante der Platte P beim Umsetzen der Platte P vom Plattenförderer 1 auf das Stapelgestell 2 während des Schwenkvorgangs des Transportarms 4 und der damit aufgrund der Einwirkung des Gestänges 6 oder des Gestänges 7 auf die Schwenkbewegung des Saugrahmens 5 dargestellt.

## Patentansprüche

1. Einrichtung zur Plattenübergabe zwischen einem Plattenförderer (1) und einer anderen Vorrichtung wie beispielsweise einem Stapelgestell, oder umgekehrt,
mit einem Gestell (2) und einem an dem Gestell angeordneten Transportarm (4), der an seinem freien Ende einen Plattengreifer (5) zum Ergreifen und Halten der jeweils zu übergebenden Platte (P) trägt und zwischen dem Plattenförderer (1) und der anderen Vorrichtung (2) schwenkbar ist,
wobei der Plattengreifer (5) am Transportarm (4) wahlweise in eine mit seinen Plattengreiforganen nach unten weisende Position zum Ergreifen einer Platte (P) auf dem Plattenförderer (1) an deren Oberseite und in eine mit seinen Greiforganen nach oben weisende Position (5b) zum Ergreifen einer Platte (P) auf dem Plattenförderer (1) an deren Unterseite,
und wobei der Plattenförderer (1) mit Aussparungen ausgebildet ist, die ein Eintauchen des Transportarms (4) mit dem Plattengreifer (5) ermöglichen, **dadurch gekennzeichnet, daß**
die wahlweise Schwenkbarkeit des Plattengreifers (5) durch zwei gesonderte Gestänge (6, 7) bewerkstelligt wird, die jeweils mit einem Ende am Gestell (2) und mit dem anderen Ende über einen Kupplungsmechanismus mit dem Plattengreifer (5) verbunden sind, derart, daß der Kupplungsmechanismus wahlweise das eine Gestänge (6) oder das andere Gestänge (7) wirkungsmäßig mit dem Plattengreifer (5) kuppelt und das jeweils andere Gestänge (7 oder 6) in eine Leerlaufstellung schaltet,
und wobei die Anordnung so getroffen ist, daß das jeweils wirkungsmäßig mit dem Plattengreifer (5) gekuppelte Gestänge (6 oder 7) im kinematischen Zusammenwirken mit der Schwenkbewegung des Transportarms (4) den Plattengreifer (5) in die jeweilige Stellung schwenkt.

2. Einrichtung nach Anspruch 1, wobei der Plattengreifer (5) ein mit einer Mehrzahl von Saugnäpfen als Greiforgane bestückter Saugrahmen ist.

3. Einrichtung nach Anspruch 1 oder 2, wobei jedes Gestänge (6, 7) aus einem am Gestell (2, 8) angelenkten Glied (61, 71) und einem damit gelenkig (63, 73) verbundenen, als Schwenkhebel ausgebildeten und mit dem Kupplungsmechanismus verbundenen Glied (62, 72) verbunden ist.
